(19) Europäisches Patentamt
European Patent Office
Office européen des brevets

(11) Veröffentlichungsnummer: **0 033 900**
**B1**

(12) **EUROPÄISCHE PATENTSCHRIFT**

(45) Veröffentlichungstag der Patentschrift: **08.08.84**

(51) Int. Cl.³: **G 11 B 5/70**

(21) Anmeldenummer: **81100590.9**

(22) Anmeldetag: **28.01.81**

(54) **Magnetische Aufzeichnungsträger.**

(30) Priorität: **11.02.80 DE 3005009**

(43) Veröffentlichungstag der Anmeldung: **19.08.81 Patentblatt 81/33**

(45) Bekanntmachung des Hinweises auf die Patenterteilung: **08.08.84 Patentblatt 84/32**

(84) Benannte Vertragsstaaten: **DE FR GB IT NL**

(56) Entgegenhaltungen:
**EP-A-0 020 951**
**DE-A-2 236 080**
**DE-A-2 557 408**
**GB-A-2 030 573**

(73) Patentinhaber: **BASF Aktiengesellschaft, Carl-Bosch-Strasse 38, D-6700 Ludwigshafen (DE)**

(72) Erfinder: **Lehner, August, Wachenheimer Strasse 4, D-6701 Roedersheim-Gronau (DE)**
Erfinder: **Hartmann, Heinrich, Dr., Weinheimer Strasse 46, D-6703 Limburgerhof (DE)**
Erfinder: **Bachmann, Rudolf, Dr., Winklerstrasse 12, D-6710 Frankenthal (DE)**
Erfinder: **Balz, Werner, Dr., Carl-Bosch-Strasse 46, D-6703 Limburgerhof (DE)**
Erfinder: **Kohl, Albert, Wiesenstrasse 3, D-6714 Weisenheim (DE)**

**EP 0 033 900 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft magnetische Aufzeichnungsträger aus einem nichtmagnetischen Trägermaterial mit mindestens einer Magnetschicht auf der Basis von in einem, ein ionomeres Polyurethanelastomer aufweisenden organischen Bindemittel feinverteilten anisotropen magnetischen Material.

Um magnetische Aufzeichnungsträger herzustellen, wurden bisher die das magnetische Material enthaltenden Schichten vorwiegend mit Hilfe hochpolymerer, lösungsmittelhaltiger, physikalisch trocknender oder chemisch vernetzbarer Bindemittel oder Bindemittelgemischen hergestellt. Dabei kamen Lösungsmittel wie zum Beispiel Methyläthylketon, Methylisobutylketon, Äthyl- und Butylacetat, Methanol, Äthanol, Propanol, Butanol, Toluol, Xylol, Tetrahydrofuran und Dioxan zum Einsatz. Von Nachteil sind dabei die nicht umweltfreundlichen Eigenschaften, vor allem Feuergefährlichkeit und Toxizität dieser Lösungsmittel, sowie der relativ hohe Preis. Aus diesen Gründen wurde es schon seit langem als erforderlich angesehen, in geschlossenen Systemen zu arbeiten und das Lösungsmittel über eine zusätzlich zu installierende Rückgewinnungsanlage im Kreislauf zu benutzen.

Es wurde deshalb schon vorgeschlagen, wäßrige Polymerdispersionen bei der Herstellung der für die Fertigung von magnetischen Aufzeichnungsträgern geeigneten Dispersionen der magnetischen Materialien einzusetzen. So beschreiben die DE-OS 2 513 421 und DE-OS 2 513 422 wäßrige Polymerdispersionen auf der Basis vernetzungsfähiger Vinylacetat- oder Acrylat-Polymerer und Melamin/Formaldehyd. Die bei der Herstellung dieser Dispersionen benötigten Hilfsstoffe, wie Schutzkolloide, Verdickungsmittel oder Emulgatoren, führen jedoch bei der Herstellung der Dispersionen der magnetischen Materialien zu Schaumbildung und zu magnetischen Schichten mit erhöhter Schmierneigung.

In der DD-PS 116 963 werden magnetische Aufzeichnungsträger offenbart, bei denen die Magnetschichten mit wäßrigen Dispersionen von Polymerpartikeln mit gegenüber den magnetischen Materialien unterschiedlichem Vorzeichen der elektrischen Ladung hergestellt werden. Nach dieser Patentschrift werden weicheingestellte Polymerdispersionen empfohlen, um knickfeste Magnetschichten mit guter Haftung auf dem Trägermaterial zu erreichen, wie z. B. weich eingestellte Polyacrylate, Copolymerisate von Vinylacetaten mit ungesättigten organischen Säuren, Copolymerisate von Vinyl- und Vinylidenchloriden, Copolymerisate von Styrol und Butadien, Copolymerisate von Acrylester und Styrol sowie Polyurethane deren Teilchengröße nicht größer, zweckmäßig kleiner, als die der magnetischen Pigmente sein soll. Mit derartigen Bindemitteln aufgebaute magnetische Aufzeichnungsträger sind jedoch empfindlich gegen Feuchtigkeit, neigen zum Kleben und Schmieren, und außerdem ist die Magnetschicht nicht abriebfest genug.

Der Einsatz von vernetzten kationischen Polyurethanen zur Beschichtung von Leder und Textil und auch für die Herstellung von Magnetschichten wird in der DE-PS 116 248 vorgeschlagen. Diese Polyurethane werden durch Reaktion von Polyharnstoffurethanelektrolyt-Dispersionen, welche durch Umsetzung von aromatischen und/oder aliphatischen Diisocyanaten mit längerkettigen Diolen zu NCOterminalen Präpolymeren, anschließender Kettenverlängerung mit tertiären Stickstoff enthaltenden Diolen, weiterer Umsetzung mit Harnstoff sowie Protonierungs- bzw. Quarternierungsmitteln und anschließender Dispergierung in Wasser gewonnen werden, mit Methylolätherverbindungen hergestellt. Von Nachteil ist dabei, daß eine Vernetzung der Harnstoffgruppen mit N-Methyloläthern notwendig ist. Insbesondere ergeben sich jedoch aus der pH-Empfindlichkeit der Bindemittel-Dispersion Schwierigkeiten. So wäre es erforderlich, beim Dispergieren der meist eine saure oder aber basische Oberfläche aufweisenden magnetischen Materialien diese zuerst dem pH-Wert des Bindemittels anzugleichen. Da bereits geringe Unterschiede im pH-Wert das Polyurethan anvernetzen oder zum Teil koagulieren ließen, würden sich sowohl Schwierigkeiten bei der Verarbeitung der Magnetdispersion ergeben als auch die Qualität der magnetischen Aufzeichnungsträger auf Grund der dadurch verursachten höheren Fehlerzahl beeinträchtigt werden.

Aufgabe der Erfindung war es daher, auf Grund der bekannten Vorteile wäßriger Polymerdispersionen, schichtförmige magnetische Aufzeichnungsträger bereitzustellen, welche die geschilderten Nachteile nicht aufweisen, d. h. daß die Aufzeichnungsträger nicht feuchtigkeitsempfindlich sind, nicht zum Verkleben neigen, einen geringen Schichtabrieb aufweisen, und ein günstiges Fehlerverhalten zeigen.

Es wurde nun gefunden, daß magnetische Aufzeichnungsträger aus einem nichtmagnetischen Trägermaterial mit mindestens einer Magnetschicht auf der Basis von in einem, ein ionomeres Polyurethanelastomer aufweisenden organischen Bindemittel feinverteilten anisotropen magnetischen Material, den gestellten Anforderungen genügen, wenn als Bindemittel wäßrige Polyurethandispersionen aus Polyurethanlösungen, die durch Umsetzung von Polyisocyanaten mit organischen Polyhydroxylverbindungen in Gegenwart organischer Lösungsmittel, die gegenüber Isocyanatgruppen inert sind, erhalten werden, zur Anwendung gelangen, mit der Maßgabe, daß an die durch Umsetzung von Polyisocyanaten mit einem Gemisch aus

a) Acrylesterdiolen mit Molekulargewichten zwischen 146 und 3000,
b) anderen von a) verschiedenen organischen Polyhydroxylverbindungen mit Molekulargewichten zwischen 400 und 5000 sowie gegebenenfalls
c) von a) verschiedenen Diolen, Diaminen, Aminoalkoholen oder Triolen mit Molekulargewichten

zwischen 62 und 400 oder Wasser

im NCO/OH-Verhältnis von 0,85 : 1 bis 1,15 : 1 erhaltenen Reaktionsprodukte das Salz einer Mercaptocarbonsäure in einer solchen Menge addiert wird, daß das Additionsprodukt 0,5 bis 10 Gew.-% Carboxylatgruppen enthält, wenn die Lösung dieses Additionsproduktes durch Zugabe von Wasser in eine wäßrige Dispersion überführt und das organische Lösungsmittel entfernt wird.

Insbesondere eignen sich diese wäßrigen Polyurethandispersionen als Bindemittel für magnetische Aufzeichnungsträger, wenn sie als Filme bei 50° C einen Elastizitätsmodul zwischen 50 und 700 N/mm² und eine Pendelhärte nach DIN 53 157 zwischen 20 und 110 s aufweisen und sich die jeweiligen Werte für Elastizitätsmodul und Pendelhärte bei Raumtemperatur um nicht mehr als den Faktor 3,5 erhöhen, wie es in der EP-A-20 951 vorgeschlagen wurde.

Vor allem haben sich solche wäßrigen Polyurethandispersionen als vorteilhaft erwiesen, welche entsprechende Filme mit einem Elastizitätsmodul von größer 100, insbesondere größer 120 N/mm² und kleiner 650 N/mm², insbesondere kleiner 600 N/mm² bei einer Pendelhärte nach DIN 53 157 von größer 25, insbesondere größer 30 s und kleiner 110 s, jeweils gemessen bei einer Temperatur von 50° C, bilden und wobei sich die jeweiligen Werte für Elastizitätsmodul und Pendelhärte bei Raumtemperatur um nicht mehr als den Faktor 2,5, insbesondere nicht mehr als um den Faktor 1,6 erhöhen.

Die vollständig oder teilweise im organischen Lösungsmittel gelösten Salze der Mercaptocarbonsäure addieren sich über Thioätherbrücken unter Einbau ionischer Gruppen an die Acrylatdoppelbindungen der Acrylesterdiolen, wobei 10 bis 100% der Acrylatdoppelbindungen mit Mercaptocarbonsäuresalz umgesetzt sein können.

Im Rahmen der Erarbeitung des erfindungsgemäßen Verfahrens hat sich ebenfalls herausgestellt, daß die gewünschten Eigenschaften auch mit entsprechenden ionomeren Polyurethandispersionen erzielt werden können, die durch Kombination mit anderen nichtionomeren Polymeren, z. B. Polyvinylidenchlorid, Vinylchlorid-Acrylnitrilpolymeren, Polyvinylformal, Polyurethane ohne ionische Gruppen, Di- und/oder Polyisocyanate und Epoxidharzen erhalten werden. Dabei hat es sich als vorteilhaft erwiesen, wenn dem z. B. in Aceton gelösten Polyurethanionomeren das andere Polymere zugegeben, dann das Wasser eingebracht und das organische Lösungsmittel abdestilliert wird. Dadurch läßt sich die Verwendung eines ansonsten bei der Herstellung der Bindemitteldispersion erforderlichen Dispergiermittels vermeiden. Außerdem hat sich überraschenderweise gezeigt, daß mit den auf diese Weise hergestellten ionomeren Polyurethandispersionen die mechanischen Eigenschaften des Bindemittels, wie Elastizitätsmodul und Pendelhärte verbessert werden, bei der Herstellung der Magnetmaterialdispersion die Schaumbildung unterbleibt sowie bei den resultierenden Magnetschichten Abrieb und Reibung günstig beeinflußt werden. Vorteilhaft werden Dispersionen eingesetzt, die aus 50 bis 95 Gew.-Teile an Polyurethanionomeren und 5 bis 50 Gew.-Teilen an nichtionomeren Polymeren bestehen.

Geeignete Ausgangsstoffe für die Herstellung der erfindungsgemäß eingesetzten Polyurethanionomeren sind Verbindungen mit mehreren reaktionsfähigen Wasserstoffatomen, die im wesentlichen linear sind und ein Molekulargewicht von 300 bis 10 000, vorzugsweise 500 bis 4000 haben. Diese Verbindungen besitzen endständige Hydroxyl-, Carboxyl-, Amino- oder Mercaptogruppen, bevorzugt sind Polyhydroxyverbindungen, wie Polyester, Polyacetale, Polyäther, Polythioäther, Polyamide, Epoxide oder Polyesteramide. Als Polyether seien die Polymerisationsprodukte des Äthylenoxids, Propylenoxids, Tetrahydrofurans, Butylenoxids sowie ihre Misch- oder Pfropfmischpolymerisationsprodukte sowie die durch Kondensation von mehrwertigen Alkoholen oder Mischungen derselben gewonnenen Kondensate oder die durch Alkoxylierung von mehrwertigen Alkoholen, Aminen, Polyaminen oder Aminoalkoholen gewonnenen Produkte genannt. Als Polyacetale kommen z. B. die aus Hexandiol und Formaldehyd hergestellten Verbindungen in Frage. Unter den Polythioäthern sind insbesondere die Kondensationsprodukte von Thiodiglykol und seiner Mischung mit anderen Glykolen oder Polyhydroxylverbindungen geeignet.

Auch bereits Urethan- oder Harnstoffgruppen enthaltende Polyhydroxylverbindungen sowie ggf. modifizierte natürliche Polyhydroxylverbindungen wie Rizinusöl oder Kohlehydrate sind verwendbar. Selbstverständlich können zur Variation der Hydrophilie bzw. der Hydrophobie und der mechanischen Eigenschaften der Verfahrensprodukte Mischungen verschiedener Polyhydroxylverbindungen eingesetzt werden.

Zu den Aufbaukomponenten der für die erfindungsgemäßen Aufzeichnungsträger eingesetzten Polyurethane ist folgendes auszuführen:

Als Polyisocyanate eignen sich die üblichen, aus der Polyurethanchemie bekannten Verbindungen, insbesondere Diisocyanate. Es können sowohl aromatische als auch aliphatische oder heterocyclische Diisocyanate verwendet werden, vorzugsweise 4,4'-Diphenylmethandiisocyanat, aber auch Dicyclohexylmethandiisocyanat, 1,5-Naphthylendiisocyanat, 2,4- und 2,6-Toluylendiisocyanat, Hexamethylendiisocyanat, Isophorondiisocyanat, Trimethylhexamethylendiisocyanat. In einigen speziellen Fällen können auch teilweise verkappte Polyisocyanate verwendet werden, welche die Bildung selbstvernetzender Polyurethane ermöglichen, z. B. dimeres Toluylendiisocyanat, oder mit beispielsweise Phenol, tert.-Butanol, Phthalimid oder Caprolactam partiell umgesetzte Polyisocyanate.

(a) Als Acrylesterdiole mit Molekulargewichten zwischen 146 und 3000 eignen sich Reaktionsprodukte von Epoxidverbindungen mit polymerisierbaren olefinisch ungesättigten Carbonsäuren, insbesondere Acryl- und Methacrylsäure, wobei jeweils etwa auf jede Epoxidgruppe eine Carboxylgruppe kommt, sowie Reaktionsprodukte von Dicarbonsäuren mit polymerisierbaren olefinisch ungesättigten Glycidylverbindungen, wie sie z. B. in der DE-OS 21 64 386 beschrieben sind.
Als ungesättigtes Acrylesterdiol eignen sich auch Umsetzungsprodukte aus OH-Gruppen-tragenden Monoepoxyden wie Glycidol mit (Meth)-Acrylsäure. Geeignete polymerisierbare Diole (Polyole) können z. B. aus Epoxiden mit zwei endständigen Epoxidgruppen gemäß der allgemeinen Formel

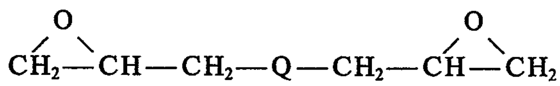

erhalten werden, in der Q ein zweibindiges Radikal bedeutet, wie z. B.

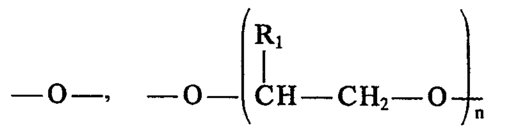

mit $n = 1-10$, wobei $R_1$ für Wasserstoff oder Methyl steht, d. h. also ein von Äthylenglykol oder Propylenglykol abgeleitetes Radikal, ein $-O-(CH_2)_m-O$-Rest mit $m = 1$ bis 7 oder wobei dieses Radikal von Polyäthylenglykol oder Polypropylenglykol herleitbar ist, oder Q für den Rest der allgemeinen Formel

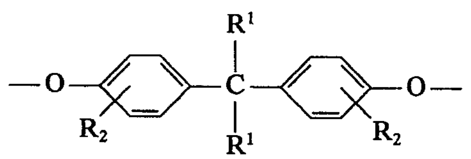

steht, wobei dieses Radikal von 4,4'-Dihydroxydiphenylmethan Bisphenol A oder kernsubstituierten Derivaten dieser Verbindungen hergeleitet werden kann. Die Umsetzungsprodukte der Epoxidverbindungen mit Acryl- und/oder Methacrylsäure sollten bei der späteren Umsetzung mit Diisocyanaten weitgehend bifunktionell in bezug auf OH-Gruppen sein. Bei einer OH-Funktionalität $>3$ besteht sonst die Gefahr der Vernetzung.
Die Umsetzung zwischen den Epoxidverbindungen und den polymerisierbaren olefinisch ungesättigten Säuremonomeren ist eine ringöffnende Veresterung zwischen den Epoxidgruppen der Diepoxidverbindungen und den Carboxylgruppen der polymerisierbaren (Meth)acrylsäure, die etwa analog der DE-OS 2 164 386 in bekannter Weise ausgeführt werden kann.

Die vorgenannten Epoxidverbindungen und deren Umsetzungsprodukte können allein oder im Gemisch verwendet werden. Als Komponente (a) eignen sich bevorzugt Umsetzungsprodukte aus Bisphenol A-Digylcidyläther (z. B. ®Epikote 828 der Fa. Shell) oder Glycidol mit Acryl- oder Methacrylsäure.

Die ungesättigten Polyurethane werden dann durch Umsetzen von Diisocyanaten mit den so erhaltenen (Meth-)acrylesterdiolen mit einem Molekulargewicht von 146 bis 3000 (a), Polydihydroxylverbindungen mit einem Molekulargewicht von 400 bis 5000 (b) und ggf. Kettenverlängerungsmitteln (c) in Lösung hergestellt.

(b) Als von (a) verschiedene organische Polyhydroxylverbindungen mit Molekulargewichten zwischen 400 und 5000, vorzugsweise zwischen 500 und 4000, eignen sich im wesentlichen lineare Polyester, Polycarbonate, Polylactone (z. B. Polycaprolacton) und Polyäther. Außer endständigen Hydroxylgruppen können derartige Verbindungen auch Carboxyl-, Amino- oder Mercaptogruppen enthalten.
Als Polyäther seien z. B. die Polymerisationsprodukte des Äthylenoxyds, Propylenoxyds, Tetrahydrofurans, Butylenoxyds sowie ihre Misch- oder Pfropfpolymerisationsprodukte sowie die durch Kondensation von mehrwertigen Alkoholen oder Mischungen derselben gewonnenen Kondensate oder die durch Alkoxylierung von mehrwertigen Alkoholen gewonnenen Produkte genannt.
Geeignete Polyester (b) sind z. B. Veresterungsprodukte von Adipinsäure mit $C_2-C_{10}$-Alkandiolen oder Oxalkandiolen. Geeignete Polycarbonate sind z. B. Hexandiolpolycarbonate.

(c) Als gegebenenfalls mitzuverwendende, von (a) verschiedene Diole, Diamine, Aminoalkohole oder Triole mit Molekulargewichten zwischen 62 und 400 eignen sich entsprechende Kettenverlängerungsmittel, wie die üblichen gesättigten oder ungesättigten Glykole, wie Äthylenglykol oder Kondensate des Äthylenglykols, Butandiol, Propandiol-1.2, Propandiol-1.3, Neopentylglykol, Diäthoxy-hydrochinon, Butendiol, mono- oder bishydroxyalkoxylierte aliphatische, cycloaliphatische aromatische oder heterocyclische primäre Amine, wie beispielsweise N-Methyläthanolamin, N-Butyläthanolamin, N,N-Bis- -aminopropyl-N-methylamin, N-Oleyläthanolamin, N-Cyclohexylisopropanolamin, die aliphatischen, cycloaliphatischen oder aromatischen Diamine, wie Äthylendiamin, Hexamethylendiamin, 1,4-Cyclohexylendiamin, Benzidin, Diaminodiphenylmethan, die Isomeren des Phenylendiamins oder Hydrazin, Aminoalkohole, wie Äthanolamin, Propanolamin oder Butanolamin. Mehrfunktionelle Alkohole wie Trimethylolpropan, Glycerin usw. sollten in weniger als 10 Äquivalent% verwendet werden.
Die Komponenten (a), (b) und (c) werden im allgemeinen in Mengen von 100 : (10 bis 400) : (0 bis 30), vorzugsweise 100 : (20 bis 300) : (1 bis 20) eingesetzt.
Bei der Wahl des Lösungsmittels ist zu beachten, daß bei der Herstellung der Polyurethanmasse kein Lösungsmittel verwendet wird, das unter den Reaktionsbedingungen mit Isocyanatgruppen reagierende funktionelle Gruppen besitzt. Im erfindungsgemäßen Verfahren kann jedes beliebige Lösungsmittel eingesetzt werden, das mit der Polyurethanmasse und den Reaktionspartnern nicht in Reaktion tritt. Bevorzugte Lösungsmittel sind gegebenenfalls halogenierte Kohlenwasserstoffe, Ketone, Alkohole, Äther, Ester oder Nitrile, wie z. B. Aceton, Methyläthylketon, Isopropanol, tert.-Butanol, Acetonitril, Äthylacetat, Methylenchlorid, Chloroform, Tetrachlorkohlenstoff, Dimethylformamid, Dimethylsulfoxyd, Tetrahydrofuran oder Dioxan. Selbstverständlich können auch Mischungen derartiger Lösungsmittel verwendet werden.

Die Herstellung der Polyurethan-Lösungen kann auf üblichen Wegen erfolgen, z. B.:

In Masse (im Kessel oder auf Bandanlagen):
Bei einer Synthese auf der Bandanlage werden die Ausgangsprodukte mittels einer Zahnradpumpe flüssig über einen Intensiv-Mischer auf ein langes Band gegeben, welches eine beheizte und gekühlte Zone besitzt. Nachdem das noch nicht ausreagierte PUR das Band verlassen hat, wird es bis zur Vollendung der Polyaddition in der Wärme gelagert und dann gelöst.

Einstufenreaktion in Lösung:
Alle Reaktionsteilnehmer werden 20 bis 90%ig, vorwiegend 30 bis 70%ig, in Lösungsmittel in das Reaktionsgefäß eingewogen und auf 20 bis 130°C, vorwiegend auf 30 bis 90°C erwärmt. Das Polymere ist fertig, wenn der gewünschte NCO-Wert erreicht ist (bei Überschuß an Isocyanat) oder wenn alle NCO-Gruppen abreagiert sind (bei Überschuß an H-aktiven Verbindungen).

Zweistufenreaktion in Lösung:
Vorreaktion von Polyol und Diisocyanat wird in einem Teil des Lösungsmittels bei vorwiegend 30 bis 90°C durchgeführt, dann wird mit einem Diol und gegebenenfalls Triol die Kette verlängert. Die weitere Fahrweise entspricht der Einstufenreaktion.

Die Herstellung kann mit Polyurethankatalysatoren, wie sie aus der Polyurethanchemie bekannt sind, beschleunigt werden. Gebräuchliche Katalysatoren sind z. B. metallorganische Verbindungen, wie Dibutylzinndilaurat, tert.-Amine oder Triazine.
Das Polyurethan kann vor der Mercaptocarbonsäuresalzaddition 0,1 bis 10, vorzugsweise 0,3 bis 5 Gew.-% NCO-Gruppen enthalten, in einer anderen bevorzugten Ausführungsform enthält das Polyurethan jedoch keine NCO-Gruppen mehr.
Als Mercaptocarbonsäuren für das erfindungsgemäße Verfahren eignen sich alle Carbonsäuren, die eine Mercaptogruppe tragen. Besonders geeignet sind Mercaptosäuren, bei denen die Mercaptogruppe in $\alpha$- oder $\beta$-Stellung zur Säuregruppe steht. Die Mercaptocarbonsäuren können aliphatisch oder aromatisch sein, beispielsweise Mercaptoessigsäure, Mercaptocyclohexansäure, Mercaptophenylessigsäure, Mercaptobenzoesäure, Mercaptotoluylensäure, Mercaptochlorbenzoesäure. Ebenfalls geeignet sind Umsetzungsprodukte von Mercaptoäthanol mit Carbonsäureanhydriden z. B. mit Bernsteinsäureanhydrid, Maleinsäureanhydrid, Phthalsäureanhydrid, wenn dadurch die SH-Gruppe frei bleibt. Besonders bevorzugt ist Mercaptoessigsäure.
Zur Überführung der Mercaptocarbonsäuren in ihre Salzform geeignete Verbindungen sind z. B.: organische Basen wie monofunktionelle primäre, sekundäre und tert.-Amine wie beispielsweise Methylamin, Diäthylamin, Trimethylamin, Triäthylamin, Äthylamin, Tributylamin, Pyridin, Methyläthylamin, Diäthylmethylamin, Anilin, Toluidin, alkoxylierte Amine wie Äthanolamin, Diäthanolamin, Triäthanolamin, Methyldiäthanolamin, Oleyldiäthanolamin sowie polyfunktionelle Amine bei denen die einzelnen Aminogruppen gegebenenfalls unterschiedliche Basizität aufweisen können wie z. B. N,N-Dimethyläthylendiamin, Amino-pyridin, N,N-Dimethylhydrazin.
Bevorzugte Verbindungen sind Amine mit einem Siedepunkt unter 120°C und davon noch die tert.-Amine wie z. B. Trimethylamin oder Triäthylamin.
Anorganische Basen, basisch reagierende oder basenabspaltende Verbindungen, wie Ammoniak, Alkali- oder Erdalkalimetallhydroxyde, -carbonate und -oxyde, wie Natriumhydroxyd, Kaliumhydroxyd sind ebenfalls geeignet. Bevorzugte Verbindungen sind Ammoniak, Kaliumhydroxyd, Natriumhydroxyd. Die Polyurethanlösung wird mit solchen Mengen Mercaptocarbonsäuresalz umgesetzt, daß der Carboxylatgruppengehalt des Additionsproduktes 0,5 bis 10, vorzugsweise 1 bis 8 Gew.-% beträgt.

Für die Addition der SH-Gruppen können die Mercaptocarbonsäuresalze in fester Form oder in Lösung verwendet werden. Die Verwendung der Lösung ist bevorzugt. Die Lösungsmittel sollten die Addition der SH-Gruppe nicht verhindern. In speziellen Fällen kann es jedoch günstig sein, wenn zumindest ein Teil des Lösungsmittels mit den gegebenenfalls noch im Polyurethan vorhandenen NCO-Gruppen unter Kettenverlängerung oder Kettenabbruch reagieren können. Beispielsweise seien genannt halogenierte Kohlenwasserstoffe, Ketone, Alkohole, Ester, Wasser, Äther, und Diolmono(meth-)acrylate. Zweckmäßigerweise verwendet man die reaktiven Lösungsmittel (reaktiven Verdünner) meist nur in untergeordneten Mengen. Als reaktive Verdünner eignen sich die bei der Polyurethanherstellung beschriebenen Kettenverlängerungsmittel.

Als nicht reaktive Lösungsmittel besonders geeignet sind Aceton, Methyläthylketon, Tetrahydrofuran, Diäthyläther, tert.-Butanol und Toluol.

Vorteile des Einbaus der ionischen Gruppen durch Anlagerung von Mercaptosäuresalzen an Doppelbindungen von Acrylaten sind, daß die Reaktion bei niedrigen Temperaturen (0 bis 60° C) durchgeführt werden kann und daß die Reaktion sehr schnell verläuft. Bei 35° C ist die Anlagerung z. B. in weniger als 10 Minuten beendet. Die Zulaufzeit kann in weiten Grenzen variiert werden. Da die Reaktion jedoch sehr schnell beendet ist, sind Zulaufzeiten von kleiner als 10 Minuten, ja sogar von 2 Minuten möglich.

Zur Verbesserung der Eigenschaften (z. B. Erhöhung der Thermostabilität und Härte) können vor der Wasserzugabe mehrfunktionelle Polyisocyanate zugesetzt werden. Geeignete mehrfunktionelle Polyisocyanate sind z. B. in den Patenten DE-PS 1 090 196, DE-PS 1 101 394, DE-PS 1 222 067 beschrieben.

Anschließend wird Wasser zugegeben und das Lösungsmittel abdestilliert, wobei eine gleichmäßige Dispersion entsteht.

Die weitere Verarbeitung der wäßrigen ionomeren Polyurethandispersionen mit dem magnetischen Material und den üblichen Hilfsstoffen zu magnetischen Aufzeichnungsträgern kann in an sich bekannter Weise erfolgen.

Als Magnetpigmente können die an sich bekannten verwendet werden, die die Eigenschaften der resultierenden Magnetschichten natürlich mitbestimmen. Als geeignete Magnetpigmente seien beispielhaft genannt: Gamma-Eisen(III)-oxid, feinteiliger Magnetit, ferromagnetisches undotiertes oder dotiertes Chromdioxid, kobaltdotiertes Gamma-Eisen(III)-oxid sowie ferromagnetische Metalle und Metallegierungspigmente, wie Legierungen aus Eisen und Kobalt (z. B. hergestellt nach den Angaben in der deutschen Patentschrift 1 247 026). Bevorzugte Magnetpigmente sind nadelförmiges Gamma-Eisen(III)-oxid sowie ferromagnetisches Chromdioxid. Die Teilchengröße beträgt im allgemeinen 0,2 bis 2 µm, bevorzugt ist der Bereich von 0,3 bis 0,8 µm.

In an sich bekannter Weise können die Magnetschichten ferner in kleinen Mengen Zusätze wie Dispergiermittel und/oder Gleitmittel, aber auch Füllstoffe enthalten, die bei der Dispergierung der Magnetpigmente oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin sowie Fettsäureester oder Wachse, Siliconöle, Ruß usw. Die Menge der Zusätze ist die an sich übliche, sie liegt im allgemeinen unter 10 Gew.-%, bezogen auf die Magnetschicht.

Das Verhältnis von Magnetpigment zu Bindemittel in den erfindungsgemäßen Aufzeichnungsmaterialien liegt im allgemeinen zwischen 1 bis 10 und insbesondere 3 bis 6 Gew.-Teilen Magnetpigment zu einem Gew.-Teil des Bindemittels bzw. Bindemittelgemisches. Es ist ein besonderer Vorteil, daß aufgrund des vorzüglichen Pigmentbindevermögens der Polyurethanionomere hohe Magnetpigmentkonzentrationen in den Magnetschichten möglich sind, ohne daß die mechanischelastischen Eigenschaften verschlechtert werden oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folie aus linearen Polyester, wie Polyäthylenterephthalat, im allgemeinen in Stärken von 4 bis 200 µm und insbesondere von 10 bis 36 µm. In neuerer Zeit ist auch die Anwendung von Magnetschichten auf Papierträgern für Zwecke der mittleren Datentechnik bedeutend geworden; auch hierfür lassen sich die erfindungsgemäßen Aufzeichnungsträger vorteilhaft verwenden.

Die Herstellung der magnetischen Aufzeichnungsträger kann in bekannter Weise erfolgen. Zweckmäßig wird die in einer Dispergiermaschine, z. B. einer Stahlkugelmühle oder einer Rührwerksmühle, aus dem Magnetpigment und dem Polyurethanionomeren unter Zusatz von Dispergiermitteln und anderen Zusätzen hergestellte Magnetpigmentdispersion filtriert und mit der üblichen Beschichtungsmaschine, z. B. mittels eines Linealgießers, auf den nicht magnetischen Träger aufgetragen. In der Regel erfolgt eine magnetische Ausrichtung, bevor die flüssige Beschichtungsmischung auf dem Träger getrocknet wird; letzteres geschieht zweckmäßigerweise während 2 bis 5 Minuten bei Temperaturen von 80 bis 120° C.

Die Magnetschichten können auf üblichen Maschinen durch Hindurchführen zwischen geheizten und polierten Walzen, ggf. bei Anwendung von Druck und Temperaturen von 50 bis 100° C, vorzugsweise 60 bis 80° C, geglättet und verdichtet werden. Die Dicke der Magnetschicht beträgt im allgemeinen 3 bis 20 µm, vorzugsweise 4 bis 10 µm. Im Falle der Herstellung von flexiblen Magnetbändern werden die

beschichteten Folien in der Längsrichtung in den üblichen, meist nach Zoll festgelegten Breiten geschnitten.

Diese erfindungsgemäßen magnetischen Aufzeichnungsträger besitzen gegenüber solchen, welche mit dem Stand der Technik entsprechenden als Bindemittel in Wasser hergestellt sind, eine verbesserte Homogenität der Magnetschicht und aufgrund dieser sowohl gleichmäßigen wie auch homogenen Magnetschicht ein deutlich verringertes Fehlerniveau. Zusätzlich muß noch die verbesserte Verschleißfestigkeit und die verringerte Empfindlichkeit gegen Feuchtigkeitseinfluß der erfindungsgemäß hergestellten magnetischen Aufzeichnungsträger hervorgehoben werden. Diese Vorteile lassen sich zudem noch mit einem Bindemittelsystem erreichen, bei dem die bekannten Nachteile und Risiken beim Einsatz von organischen Lösungsmitteln vermieden werden. Weitere Vorteile liegen in der verkürzten Pigmentierzeit des magnetischen Materials in den Polyurethanionomeren und zudem läßt sich das magnetische Material herstellfeucht einsetzen.

Die Erfindung sei anhand folgender Beispiele näher erläutert; wobei zur besseren Vergleichbarkeit die Herstellung der magnetischen Aufzeichnungsträger in gleicher Weise erfolgt, falls erforderlich jedoch mit Hilfe üblicher Verfahrensänderungen noch variiert werden kann.

## Beispiel 1

210 g eines Polyesters aus Adipinsäure und Butandiol-1,4 mit einem Molekulargewicht von 1000, 23,13 g Butandiol-1,4 1,34 g Trimethylolpropan, 207,2 g Epikote-828-diacrylat, 312,5 g 4. 4'-Diphenylmethandiisocyanat werden in 1760 g Tetrahydrofuran gelöst und nach Zugabe von 15 Tropfen Dibutylzinndilaurat und 20 Tropfen Dibutylzinnoktoat so lange bei 60° C gerührt, bis sich ein konstanter NCO-Gehalt eingestellt hat. Danach wird eine Mischung aus 55,2 g Thioglykolsäure, 60,6 g Triäthylamin und 31 g Aceton rasch zugegeben und nach 45 Minuten Reaktionszeit mit Wasser dispergiert. Das Lösungsmittel wird anschließend im Vakuum abgezogen.

Nun werden in einer Stahlkugelmühle mit einem Inhalt von 30 000 Volumenteilen, welche mit 40 000 Teilen Kugeln gefüllt ist und mit 50 Upm betrieben wird, 6000 Teile eines nadelförmigen Gamma-Eisen(III)-oxids mit einer Koerzitivfeldstärke von 24,3 kA/m in einer Lösung aus 240 Teilen 30%igem Ammoniak und 3900 Teilen Wasser 10 Stunden lang dispergiert. Zu diesem Ansatz werden dann 3750 Teile der oben hergestellten Polyurethandispersion sowie noch 60 Teile eines handelsüblichen Siliconöls zugesetzt und nochmals 30 Minuten dispergiert.

Mit der so erhaltenen Magnetmaterial-Dispersion wird nach dem Filtrieren durch einen Papierfilter mit einer Porenweite von 5 µm mittels eines üblichen Linealgießers eine Polyäthylenterephthalatfolie von 12 µm Dicke beschichtet. Vor der Trocknung bei 80 bis 120°C wird die beschichtete Folie zur Ausrichtung der Gamma-Eisen(III)-oxid-Teilchen durch ein homogenes Magnetfeld geführt. Danach erfolgt noch eine Glättung der Schicht durch Kalandieren bei 80°C und 23 N/mm$^2$ Liniendruck. Die Dicke der Magnetschicht beträgt 5,0 ± 0,3 µm. Die beschichtete Folie wird anschließend in 3,81 mm breite Magnetbänder geschnitten und folgenden Prüfungen unterzogen:

### Test 1
Reibungskoeffizient, Schicht/Stahl, vor bzw. nach Dauerlauf (1 Stunde, bei einer Umgebungstemperatur von 23° C und einer rel. Luftfeuchte von 50%)

Die Bestimmung der Reibungszahlen erfolgt nach DIN 45 522, Blatt 1. Die Reibungskoeffizienten werden am unbenutzten Band und am durch Dauerlauf benutzten Band gemessen.

### Test 2
Quasistatische Reibung

Die Reibungszahl wird durch Messen einer Zugkraft bestimmt, die ein über eine feststehende Meßtrommel geführtes Magnetband durch Reibung erzeugt. Die Meßtrommel ist eine Stahl-Trommel mit einer Oberflächenrauhigkeit von ca. 0,15 µm und einem Durchmesser von 70 mm. Das Bandstück ist 25 cm lang und wird bei einem Bandzug von 20 cN mit einer Geschwindigkeit von 1 mm/sec und einem Umschlingungswinkel von 180° über die Trommel geführt. Der Zug an der Meßdose F ist ein Maß für die Reibungszahl µ, und zwar nach

$$\mu = 1 \cdot \ln \frac{F}{20}.$$

Test 3
Dynamische Reibung

Die Reibungszahl hierfür wird entsprechend dem Verfahren nach Test 2 gemessen, mit dem Unterschied, daß sich die Meßtrommel mit einer Geschwindigkeit von 9,5 cm/sec dreht.

Test 4
Klebetest

Die Prüfung der Klebeneigung der Magnetbänder erfolgt nach MIL-T-21029A, wobei zwischen Verkleben und Schichtabzug unterschieden wird.

Die Meßergebnisse sind in der Tabelle angegeben.

Beispiel 2

415 g eines Polycaprolactons (OH-Zahl 135), 27 g Butandiol-1,4 und 300 g 4.4'-Diphenylmethandiisocyanat wurden in 1113 g Tetrahydrofuran gelöst, mit 10 Tropfen Dibutylzinndilaurat sowie 20 Tropfen Dibutylzinnoktoat versetzt, auf 60° C aufgeheizt und so lange gerührt, bis der NCO-Gehalt 1,8% betrug.

Danach wurden 454 g Epikote 1001-diacrylat gelöst in 454 g Aceton zugegeben und so lange weitergerührt, bis der NCO-Gehalt 0% betrug.

Nun wurde eine Mischung aus 73,6 g Thioglykolsäure (80%ig in Wasser), 80,8 g Triäthylamin und 42 g Aceton sowie 30 Minuten später 175 g Desmodur L eingerührt.

10 Minuten nach der Desmodur L-Zugabe wurde mit Wasser dispergiert und das Lösungsmittel im Vakuum abgezogen. Es wurde eine stabile wäßrige Dispersion erhalten. Damit wird, wie in Beispiel 1 beschrieben, ein Magnetband hergestellt. Die am Polymerenfilm und am Magnetband erhaltenen Meßergebnisse sind in der Tabelle angegeben.

Beispiel 3

Es wurde wie in Beispiel 2 verfahren, jedoch wurde hier 233 g Desmodur L statt 175 g DL zugesetzt. Damit wird, wie in Beispiel 1 beschrieben, ein Magnetband hergestellt. Die am Polymerfilm und am Magnetband erhaltenen Meßergebnisse sind in der Tabelle angegeben.

Beispiel 4

In 920 g Tetrahydrofuran wurden 250 g eines Polyesters aus Adipinsäure und Butandiol-1,4 (MG 1000), 22,5 g Butandiol-1,4, 292 g Epikote-828-diacrylat, 4,47 g Trimethylolpropan sowie 350 g 4.4'-Diphenylmethandiisocyanat gelöst und nach Zugabe von 10 Tropfen Dibutylzinndilaurat und 20 Tropfen Dibutylzinnoktoat so lange bei 60° C gerührt, bis der NCO-Gehalt 1,6% beträgt.

Anschließend wurden 115 g Thioglykolsäure (80%ig), 101 g Triäthylamin und 42 g Aceton als Mischung zugegeben und nach 30 Minuten mit Wasser dispergiert. Nach dem Abziehen des Lösungsmittels im Vakuum entstand eine stabile wäßrige Dispersion. Damit wurde, wie in Beispiel 1 beschrieben, ein Magnetband hergestellt. Die am Polymerfilm und am Magnetband erhaltenen Meßergebnisse sind in der Tabelle angegeben.

Beispiel 5

250 g eines Polyesters aus Adipinsäure und Butandiol-1.4 (MG 1000), 26 g Neopentylglykol, 4,47 g Trimethylolpropan, 272 g Epikote-828-diacrylat sowie 350 g 4.4'-Diphenylmethandiisocyanat wurden in 902 g Tetrahydrofuran gelöst, auf 60° C unter Zugabe von 10 Tropfen Dibutylzinndilaurat, und 20 Tropfen Dibutylzinnoktoat aufgeheizt und so lange bei dieser Temperatur gerührt, bis der NCO-Gehalt 1,6% betrug. Nun wurde eine Mischung aus 115 g Thioglykolsäure (80%ig), 101 g Triäthylamin und 52 g Aceton zugegeben und nach 30 Minuten mit Wasser dispergiert.

Das Lösungsmittel wurde anschließend unter Vakuum abdestilliert. Es entstand eine stabile Dispersion. Damit wurde, wie in Beispiel 1 beschrieben, ein Magnetband hergestellt. Die am Polymerfilm und am Magnetband erhaltenen Meßergebnisse sind in der Tabelle angegeben.

Beispiel 6

In 900 g Tetrahydrofuran wurden 150 g eines Polyesters aus Adipinsäure und Butandiol-1.4 (MG 1000), 81,2 g Silikoftal ®HTL, 262 g Epikote-828-diacrylat, 22,5 g Butandiol-1,4, 4,47 g Trimethylolamin sowie 350 g 4.4'-Diphenylmethandiisocyanat gelöst und nach Zugabe von 10 Tropfen Dibutylzinndilaurat und 20 Tropfen Dibutylzinnoktoat auf 60° C aufgeheizt und so lange bei dieser Temperatur gerührt, bis der NCO-Gehalt 1,9% betrug.

Nun wurde eine Mischung aus 115 g Mercaptoessigsäure (80%ig), 101 g Triäthylamin und 52 g Aceton zugegeben und 30 Minuten später mit Wasser dispergiert. Das Lösungsmittel wurde im Vakuum abdestilliert.

Mit der stabilen Dispersion wurde, wie in Beispiel 1 beschrieben, ein Magnetband hergestellt. Die am Polymerfilm und am Magnetband erhaltenen Meßergebnisse sind in der Tabelle angegeben.

Tabelle

| | Filmeigenschaften Pendelhärte in sec | | E-Modul in N/mm² | | Magnetbandeigenschaften Testnummer | | | |
|---|---|---|---|---|---|---|---|---|
| | 50° C | 23° C | 50° C | 23° C | 1 | 2 | 3 | 4 |
| Beispiel 1 | 85 | 120 | 658 | 699 | 0,43/0,36 | 0,41 | 0,45 | nein |
| Beispiel 2 | 49 | 67 | 252 | 339 | 0,38/0,36 | 0,41 | 0,43 | nein |
| Beispiel 3 | 53 | 70 | 275 | 412 | 0,37/0,34 | 0,42 | 0,41 | nein |
| Beispiel 4 | 60 | 98 | 331 | 646 | 0,27/0,33 | 0,40 | 0,47 | nein |
| Beispiel 5 | 78 | 103 | 232 | 610 | 0,34/0,29 | 0,34 | 0,52 | nein |
| Beispiel 6 | 41 | 66 | 191 | 434 | 0,34/0,29 | 0,27 | 0,41 | nein |

**Patentansprüche**

1. Magnetische Aufzeichnungsträger aus einem nichtmagnetischen Trägermaterial mit mindestens einer Magnetschicht auf der Basis von einem organischen Bindemittel, feinverteilten anisotropen magnetischen Material, wobei als Bindemittel im wesentlichen wäßrige Polyurethandispersionen aus Polyurethanlösungen, die durch Umsetzung von Polyisocyanaten mit organischen Polyhydroxylverbindungen in Gegenwart organischer Lösungsmittel, die gegenüber Isocyanatgruppen inert sind, erhalten werden, zur Anwendung gelangen, dadurch gekennzeichnet, daß Polyisocyanate mit einem Gemisch aus

a) Acrylesterdiolen mit Molekulargewichten zwischen 146 und 3000,
b) anderen von a) verschiedenen organischen Polyhydroxylverbindungen mit Molekulargewichten zwischen 400 und 5000 sowie gegebenenfalls
c) von a) verschiedenen Diolen, Diaminen, Aminoalkoholen oder Triolen mit Molekulargewichten zwischen 62 und 400 oder Wasser

im NCO/OH-Verhältnis von 0,85 : 1 bis 1,15 : 1 umgesetzt werden, an die erhaltenen Reaktionsprodukte das Salz einer Mercaptocarbonsäure in einer solchen Menge addiert wird, daß das Additionsprodukt 0,5 bis 10 Gew.-% Carboxylatgruppen enthält, dann die Lösung dieses Additionsproduktes durch Zugabe von Wasser in eine wäßrige Dispersion überführt und das organische Lösungsmittel entfernt wird.

2. Magnetische Aufzeichnungsträger gemäß Anspruch 1, dadurch gekennzeichnet, daß die wäßrige Polyurethandispersion bei einer Temperatur von 50° C Filme mit einem Elastizitätsmodul zwischen 50 und 700 N/mm² und einer Pendelhärte nach DIN 53 157 zwischen 20 und 110 s bildet und daß sich die jeweiligen Werte für Elastizitätsmodul und Pendelhärte bei Raumtemperatur um nicht mehr als den Faktor 3,5 erhöhen.

3. Magnetische Aufzeichnungsträger gemäß Anspruch 1 oder 2, dadurch gekennzeichnet, daß bei der Herstellung der wäßrigen Polyurethandispersionen an die Reaktionsprodukte aus Polyisocyanat und organischen Polyhydroxylverbindungen solche Mengen eines Salzes der Mercaptocarbonsäure addiert werden, daß 10 bis 100% der C-C-Doppelbindungen der Acrylesterdiole (a) mit Mercaptocarbonsäuresalz umgesetzt werden.

**Claims**

1. A magnetic recording medium comprising a non-magnetic base and at least one magnetizable layer, based on an anisotropic magnetic material finely dispersed in an organic binder, containing an ionomeric polyurethane elastomer, the binder used being a substantially aqueous polyurethane dispersion prepared from a polyurethane solution which has been obtained by reacting a polyisocyanate with an organic polyhydroxy compound in the presence of an organic solvent that is inert to isocyanate groups, wherein a polyisocyanate is reacted with a mixture of

(a) acrylic ester diols having a molecular weight of from 146 to 3000,
(b) organic polyhydroxy compounds which are different from (a) and have a molecular weight of from 400 to 5000, and optionally
(c) diols, diamines, aminoalcohols or triols which are different from (a) and have a molecular weight of from 62 to 400, or water,

in an NCO/OH ratio of 0.85 : 1 to 15 : 1, the salt of a mercaptocarboxylic acid is added in such an amount to the reaction product thus obtained that the adduct contains 0.5 to 10% by weight of carboxylate groups, the solution of this adduct is then converted into an aqueous dispersion by the addition of water, and the organic solvent is removed.

2. A magnetic recording medium as claimed in claim 1, wherein the aqueous polyurethane dispersion at 50°C forms films having a modulus of elasticity of from 50 to 700 $N/mm^2$ and a DIN 53 157 pendulum hardness of from 20 to 110 s, the modulus of elasticity and pendulum hardness values at room temperature being not more than 3.5 times higher.

3. A magnetic recording medium as claimed in claim 1 or 2, wherein, in the production of the aqueous polyurethane dispersion, the salt of a mercaptocarboxylic acid is added to the reaction product of polyisocyanate and organic polyhydroxy compound in such an amount that 10 to 100% of the carbon-carbon double bonds of the acrylic ester diols (a) are reacted with the mercaptocarboxylic acid salt.

**Revendications**

1. Support d'enregistrement magnétique en un matériau support non magnétique avec au moins une couche magnétique à base d'un matériau magnétique anisotrope finement réparti dans un liant organique, en employant, comme liant organique, des dispersions de polyuréthane, en principe aqueuses, constituées de solutions de polyuréthane qui sont obtenues par réaction de polyisocyanates avec des composés polyhydroxylés organiques, en présence de solvants organiques qui sont inertes vis-à-vis des groupes isocyanate, caractérisé par le fait qu'on a fait réagir, dans un rapport NCO/OH de 0,85/l à 1,15/l, des polyisocyanates avec un mélange:

a) d'acrylesterdiols de poids moléculaires compris entre 146 et 3000;
b) d'autres composés polyhydroxylés organiques différents de a), de poids moléculaires compris entre 400 et 5000 ainsi qu'éventuellement
c) des diols, diamines, aminoalcools ou triols, différents de a), de poids moléculaires compris entre 62 et 400 ou de l'eau,

qu'on a ajouté aux produits de réaction obtenus le sel d'un acide mercaptocarboxylique en quantité telle que le produit d'addition contienne 0,5 à 10% en poids de groupes carboxylate, puis on a transformé la solution de ce produit d'addition, par addition d'eau, en une dispersion aqueuse et éliminé le solvant organique.

2. Support d'enregistrement magnétique selon la revendication 1, caractérisé par le fait que la dispersion aqueuse de polyuréthane forme, à une température de 50°C, des films d'un module d'élasticité compris entre 50 et 700 $N/mm^2$ et d'une dureté au pendule, selon DIN 52 157, comprise entre 20 et 110 s, et les valeurs respectives du module d'élasticité et de la dureté au pendule n'augmentent pas, à la température ordinaire, de plus d'un facteur 3,5.

3. Support d'enregistrement magnétique selon la revendication 1 ou 2, caractérisé par le fait que, pour la préparation des dispersions aqueuses de polyuréthane, on a ajouté aux produits de réaction de polyisocyanate et de composés polyhydroxylés organiques une quantité de sel d'acide mercaptocarboxylique telle que 10 à 100% des doubles liaisons C-C des acrylesterdiols (a) ont réagi avec le sel d'acide mercaptocarboxylique.